(19) Europäisches Patentamt
European Patent Office
Office européen des brevets

(11) Veröffentlichungsnummer: **0 262 527 B1**

(12) # EUROPÄISCHE PATENTSCHRIFT

(45) Veröffentlichungstag der Patentschrift: **04.12.91**

(51) Int. Cl.$^5$: **C08G 18/00**, C08G 18/64, C08L 75/04

(21) Anmeldenummer: **87113685.9**

(22) Anmeldetag: **18.09.87**

Die Akte enthält technische Angaben, die nach dem Eingang der Anmeldung eingereicht wurden und die nicht in dieser Patentschrift enthalten sind.

(54) **Gegebenenfalls zellförmige Polyurethane, die mit einem anderen Werkstoff verbunden oder konfektioniert worden sind, und Verfahren zu ihrer Herstellung.**

(30) Priorität: **01.10.86 DE 3633365**

(43) Veröffentlichungstag der Anmeldung:
**06.04.88 Patentblatt 88/14**

(45) Bekanntmachung des Hinweises auf die Patenterteilung:
**04.12.91 Patentblatt 91/49**

(84) Benannte Vertragsstaaten:
**BE DE ES FR GB IT SE**

(56) Entgegenhaltungen:
**BE-A- 679 666**
**FR-A- 2 234 338**
**GB-A- 1 159 212**

(73) Patentinhaber: **BAYER AG**

**W-5090 Leverkusen 1 Bayerwerk(DE)**

(72) Erfinder: **Haas, Peter, Dr.**
**Zwengenberger Strasse 41**
**W-5657 Haan 1(DE)**
Erfinder: **Avar, Geza, Dr.**
**Morsbroicher-Strasse 29**
**W-5090 Leverkusen 1(DE)**

EP 0 262 527 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Herstellung von gegebenenfalls zellförmigen Polyurethanen, die mit einem anderen Werkstoff verbunden oder konfektioniert worden sind, ist bekannt. So werden z.B. PVC-Folien mit Polyurethanen hinterschäumt; die so erhaltenen Verbundstoffe werden z.B. als Armaturentafeln oder umhüllte Nackenstützen oder als Sitze im Automobilbereich in großem Maße verwendet.

Mit kleiner werdenden Luftwiderstandswerten der Automobile, auch als Folge stark gekrümmter Front- und Heckscheiben, steigt bei Sonneneinwirkung die Fahrzeuginnentemperatur stark an. Dies, so zeigt sich in jüngster Zeit, stellt an Verbundwerkstoffe, z.B. aus PVC-Folien und Polyurethanschaumstoff, immer höher werdende Anforderungen. Als Folge einer stärkeren thermischen Belastung z.B. von konfektionierten Armaturentafeln wird eine Versprödung bis hin zum Sprödbruch und eine vorangehende Verfärbung der PVC-Deckschicht beobachtet, einhergehend mit einer Schädigung auch des PUR-Schaumstoffs durch Versprödung. In diesem Zusammenhang ist ein starker Eigenschaftsverlust der Deckfolien feststellbar.

Die Aufgabe der vorliegenden Erfindung bestand nun darin, thermostabile Polyurethan(schaumstoff)e aufzufinden, welche dieses Schädigungsverhalten gegenüber den Deckschichten, bestehend aus Masseverlust, Versprödung, Polymerabbau und Elastizitätsverlust als Schädigungskriterien neben einer vorausgehenden farblichen Veränderung nich zeigen.

Überraschend wurde nun gefunden, daß Epoxide enthaltende Polyurethan(schaumstoff)e eine thermische Langzeitschädigung der mit ihnen verbundenen Deckschicht unterbinden.

Aus der US-PS 3 281 379 ist der Zusatz von Epoxiden zur Verhinderung der Eigenverfärbung von Polyurethanschaumstoffen nach Wärmealterung bekannt. Bei der vorliegenden Erfindung geht es jedoch darum, die Schädigung einer Deckschicht, die mit einem Polyurethanschaumstoff verbunden ist, durch thermische Einwirkung zu unterbinden. Überraschenderweise hat sich nun herausgestellt, daß der Zusatz von Epoxiden zu einem schaumfähigen Reaktionsgemisch die Verfärbung des Schaumstoffs bei längerer Wärmeeinwirkung zwar nicht verhindert, daß aber eine mit ihm verbundene Deckschicht durch den Gehalt des Epoxids im Schaumstoff farbstabil und in ihrer Polymerstruktur und in ihren Polymereigenschaften unverändert erhalten bleibt.

In der DE-OS 2 933 173 wird der technisch aufwendige, zusätzliche Aufbau einer thermisch vernetzbaren Haftungsschicht zwischen Schaumstoff und Deckschicht beschrieben, indem Carboxylgruppen enthaltende Copolymerisate, die auf einer Deckschicht aufgetragen worden sind, z.B. durch Epoxide thermisch vernetzt und dann mit einem schäumfähigen Polyurethan-Reaktionsgemisch hinterschäumt werden. Aus dieser Veröffentilichung ist weder Aufgabe noch Lösung der vorliegenden Erfindung zu entnehmen.

Gegenstand der Erfindung ist ein Verfahren zur Herstellung von gegebenenfalls zellförmigen, mit einem anderen Werkstoff verbundenen oder konfektionierten Polyurethanen durch Umsetzung von mindestens zwei gegenüber Isocyanaten reaktionsfähige Wasserstoffatome aufweisenden Verbindungen vom Molekulargewicht 400 bis 10 000 mit Polyisocyanaten in Gegenwart von Katalysatoren und von Stabilisatoren gegen Thermolyse und Kontaktverfärbung und gegebenenfalls in Gegenwart von Kettenverlängerungsmitteln vom Molekulargewicht 32 bis 399, Schaumstabilisatoren, Wasser und/oder organischen Treibmitteln sowie gegebenenfalls weiteren Hilfs- und Zusatzmittel und Verbindung oder Konfektionierung der erhaltenen Polyurethane mit einem anderen Werkstoff, dadurch gekennzeichnet, daß als Stabilisatoren gegen Thermolyse und Kontaktverfärbung Epoxide, vorzugsweise höherfunktionelle Epoxide vom Epoxidäquivalentgewicht von 57 bis 10 000, bevorzugt 75 bis 3000, besonders bevorzugt 100 bis 1000, in Mengen von 0,01 bis 50 Gew.-Teilen, bezogen auf 100 Gew.-Teile der mindestens zwei gegenüber Isocyanaten reaktionsfähige Wasserstoffatome aufweisenden Verbindungen vom Molekulargewicht 400 - 10 000, verwendet werden.

Als andere Werkstoffe werden Kunststoffe, vorzugsweise aus PVC, ABS, Mischungen aus PVC und ABS, ferner Polyvinlyacetat, Polyvinylbutyral, Co- und Homopolymerisate auf Basis von Vinylchlorid, Styrol, Butadien, Isopren, Chloropren, Dichlorbutadien, Ethylen, Propen oder Acrylnitril und deren Chlor- und Chlorsulfonierungsderivate in Form von Folien, Überzügen und Umrandungen, weiter Lacke auf der Basis von Celluloseestern oder Celluloseethern, Polyesterharzen, Epoxidharzen oder Alkydharzen sowie Öllacke oder Kombinationslacke dieser Komponenten oder Textilien auf der Basis von Baumwolle oder Leder verwendet.

Erfindungsgemäß bevorzugt ist, daß als mehrfunktionelle Epoxide Polyglycidylether oder - ester und/oder 1,2-Polyepoxide mit mindestens einem tertiären Stickstoffatom verwendet werden.

Verwendet werden können auch modifizierte Epoxide, die durch Umsetzung von Polyglycidylethern oder -estern und/oder 1,2-Polyepoxiden mit mindestens einem tertiären Stickstoffatom im Überschuß, bezogen auf die Epoxigruppierung, mit Carboxylgruppen enthaltenden Polyether- oder Polyesterpolyolen zu höhermolekularen Epoxiden erhalten worden sind.

Erfindungsgemäß ist ferner bevorzugt, daß als mehrfunktionelle Epoxide Bisphenol-A-bisglycidylether

und dessen höhere Homologe verwendet werden.

Die Erfindung betrifft ferner gegebenenfalls zellförmige, mit einem anderen Werkstoff verbundene oder konfektionierte Polyurethane erhältlich nach dem erfindungsgemäßen Verfahren.

Die konfektionierten, mit Epoxygruppen modifizierten Polyurethanschaumstoffe zeigen eine überraschend hohe Stabilität gegenüber ihrer Deckschicht, so daß früher aufgetretene Schädigungseffekte in der Laminatschicht, wie Versprödung, Bruchdehnungsabfall und Verfärbung nun beherrscht werden. Dies äußert sich nunmehr in einer mechanisch und optisch unveränderten Erscheinungsform des Verbund- oder Konfektionierungswerkstoffs nach thermischer Belastung.

Für die Herstellung der gegebenenfalls zellförmigen Polyurethane werden als Ausgangskomponenten eingesetzt:

1. Aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden, beispielsweise solche der Formel

$$Q(NCO)_n$$

in der

n = 2-4, vorzugsweise 2 bis 3

und

Q einen aliphatischen Kohlenwasserstoffrest mit 2-18, vorzugsweise 6-10 C-Atomen, einen cycloaliphatischen Kohlenwasserstoffrest mit 4-15, vorzugsweise 6-13 C-Atomen, oder einen araliphatischen Kohlenwasserstoffrest mit 8-15, vorzugsweise 8-13 C-Atomen,

bedeuten, z.B. solche Polyisocyanate, wie sie in der DE-OS 2 832 253, Seiten 10-11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI") Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.

2. Ausgangskomponenten sind ferner Verbindungen mit mindestens zwei gegenüber Isocyanaten reaktionsfähigen Wasserstoffatomen von einem Molekulargewicht in der Regel von 400-10 000. Hierunter versteht man neben Aminogruppen, Thiolgruppen oder Carboxylgruppen aufweisende Verbindungen, vorzugsweise Hydroxylgruppen aufweisende Verbindungen, insbesondere zwei bis acht Hydroxylgruppen aufweisende Verbindungen, speziell solche vom Molekulargewicht 1000 bis 6000, vorzugsweise 2000 bis 6000, z.B. mindestens zwei, in der Regel 2 bis 8, vorzugsweise aber 2 bis 6 Hydroxylgruppen aufweisende Polyester, Polyether, Polythiolether, Polyacetale, Polycarbonate und Polyesteramide, wie sie für die Herstellung von homogenen und von zellförmigen Polyurethanen an sich bekannt sind und wie z.B. in der DE-OS 2 832, 253, Seiten 11-18, beschrieben werden.

3. Erfindungsgemäß mitverwendet werden ferner Katalysatoren der an sich bekannten Art, so wie sie z.B. in der DE-OS 3 435 070, Seiten 12-17, und in der DE-OS 3 244 913, Seiten 26-28, beschrieben werden.

4. Als Stabilisatoren gegen Thermolyse und Kontaktverfärbung werden erfindungsgemäß Epoxide, vorzugsweise mehrfunktionelle Epoxide (Polyepoxide) in den angegebenen Mengen eingesetzt, vorzugsweise solche mit einem Epoxidäquivalentgewicht von 57 bis 10 000, insbesondere 75-3000, noch mehr bevorzugt 100-1000.

Besonders bevorzugt sind Epoxide, welche durch Epoxidierung ungesättigter Fettsäuren erhalten werden. Genannt seien in diesem Zusammenhang die Epoxiderivate von ungesättigten Triglyceriden wie z. B. von Leinöl, Sojaöl, Olivenöl, Rüböl, Palmöl, Kokosöl und Rizinusöl.

Epoxide auf der Basis von Glycidylethern und Glycidylestern sind zwar ebenfalls hervorragend wirksam; bei ihrer praktischen Verarbeitung, z.B. bei der Abmischung mit den mindestens zwei gegenüber Isocyanaten reaktionsfähige Wasserstoffatome aufweisenden Verbindungen vom Molekulargewicht 400 bis 10.000 und mit Katalysatoren, treten gelegentlich gewisse Nachteile, z. B. Probleme der Lagerstabilität, auf. Bei einer getrennten Dosierung dieser Komponenten sind naturgemäß derartige Probleme nicht vorhanden.

Vorteilhaft bei den mit den Epoxifettsäureestern erhaltenen Schaumstoffen ist weiterhin die unveränderte Elastizität der thermisch belasteten Schaumstoffe, während die Epoxide auf der Basis vom Glycidylethern und Glycidylestern im Verlauf der Prüfung die Schaumstoffe oft nachhärten lassen.

Ein bevorzugte Ausführungsform der Erfindung besteht daher darin, daß als Epoxide die Epoxidierungsprodukte ungesättigter Fettsäureester verwendet werden, insbesondere Epoxileinöl, Epoxisojaöl, Epoxikokosöl, Epoxirizinusöl, Epoxipalmöl und/oder Epoxiolivenöl.

Als Polyepoxide kommen aber auch weitere bekannte, vorzugsweise halogenfreie Polyepoxide in Betracht, insbesondere Polyglycidylether. Hier können z.B. genannt werden die Polyglycidylether mehrwertiger Phenole der verschiedensten Art, beispielsweise Polyglycidylether von Brenzcatechin, Resorcin, Hydrochinon, 4,4'-Dihydroxydiphenylmethan,4,4'-Dihydroxy-3,3'-dimethyldiphenylmethan, 4,4'-Dihydroxydiphenyldimethylmethan (Bisphenol A), 4,4'-Dihydroxydiphenylethan 4,4'-Dihydroxydiphenylcyclohexan, 4,4'-Dihydroxy-3,3'-dimethyldiphenylpropan, 4,4'-Dihydroxydiphenyl, 4,4'-Dihydroxydiphenylsulfon, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren), Diphenolen, die durch Veresterung von 2 Mol des Natriumsalzes einer aromatischen Oxicarbonsäure mit 1 Mol eines Dihalogenalkans oder Dihalogendialkylethers erhalten wurden GB-PS 1 017 612) und Polyphenolen, die durch Kondensation von Phenolen und langkettigen, mindestens zwei Halogenatome enthaltenden Halogenparaffinen erhalten wurden (GB-PS 1 024 288).

Weiterhin seien Glycidylether mehrwertiger aliphatischer Alkohole genannt, beispielsweise Glycidylether von 1,4-Butandiol, 1,4-Butendiol, Glycerin, Trimethylolpropan, Pentaerythrit und Polyethylenglykolen.

Außerdem kommen als Polyepoxide in Frage die Glycidylester mehrwertiger aromatischer, aliphatischer oder cycloaliphatischer Carbonsäuren, beispielsweise Phthalsäurediglycidylester, Terephthalsäurediglycidylester, Tetrahydrophthalsäurediglycidylester, Adipinsäurediglycidylester, Hexahydrophthalsäurediglycidylester, die jeweils gegebenenfalls durch Methylgruppen substituiert sein können, und Glycidylester von Umsetzungsprodukten aus 1 Mol eines aromatischen oder cycloaliphatischen Dicarbonsäureanhydrids und 1/2 Mol eines Diols oder 1/n Mol eines Polyols mit n Hydroxylgruppen, beispielsweise Glycidylcarbonsäureester der allgemeinen Formel

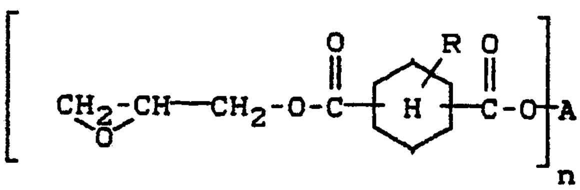

in der

A für einen mindestens zweiwertigen Rest eines gegebenenfalls durch Sauerstoff und/oder cycloaliphatische Ringe unterbrochenen, aliphatischen Kohlenwasserstoff oder einen mindestens zweiwertigen Rest eines cycloaliphatischen Kohlenwasserstoffs,

R für Wasserstoff oder einen Alkylrest mit 1 bis 3 C-Atomen und

n für eine ganze Zahl zwischen 2 und 6 steht.

Es können auch Mischungen verschiedener Einzelverbindungen, die unter die allgemeine Formel fallen, zum Einsatz gelangen.

In Betracht kommen auch 1,2-Polyepoxide mit mindestens einem tertiären Stickstoffatom pro Molekül, z.B. Bis-(N-epoxipropyl)-anilin, Bis-(N-epoxipropyl)-butylamin, Bis-(N-epoxipropyl)-4-aminophenylglycidylether, Triglycidylisocyanurat, N,N'-Diepoxipropyloxamid, Triglycidyl-1,2,4-triazolidin-3,5-dione (DE-OS 2 935 354), Glycidyl-1,2,4-triazolidin-3,5-dione mit 2 bis 10 Glycidylgruppen (DE-OS 3 027 623), N,N'-Diglycidyl-bis-hydantoinyl-Verbindungen (DE-AS 1 670 490), N,N'-Diglycidylverbindungen von cyclischen Ureiden (siehe GB-PS 1 148 570, DE-PS 2 263 492 und DE-AS 1 954 503), Polyurethandiglycidylether (US-PS 2 830 038, DE-AS 1 947 001 und DE-AS 1 966 182) und Imidgruppen enthaltende Diglycidylester (DE-AS 2 306 403).

Die 1,2-Polyepoxide mit mindestens einem tertiären Stickstoffatom pro Molekül können mit stickstofffreien 1,2-Polyepoxiden, insbesondere mit Polyglycidylethern mehrwertiger Phenole, z.B. des Bisphenol A, abgemischt werden. Solche Mischungen können beispielsweise 0,5 bis 80 Gew.-% eines 1,2-Polyepoxids mit mindestens einem tertiären Stickstoffatom pro Molekül und 20 bis 100 Gew.-% eines stickstofffreien aromatischen 1,2-Polyepoxids enthalten.

1,2-Polyepoxide, insbesondere feste 1,2-Polyepoxide, können zur Viskositätserniedrigung mit Reaktivverdünnern, z.B. flüssigen Monoepoxiden (wie Phenylglycidylethern, tert.-Butylphenylglycidylethern und/oder Allylglycidylethern) abgemischt werden.

Es kommen aber auch Polyepoxide auf der Basis heterocyclischer oder cycloaliphatischer Ringsysteme

in Betracht, z.B. Triglycidyl-s-triazin, Trisglycidylcyanurat, Trisglycidylurazol, aber auch Esterepoxide, z.B. Hexahydrophthalsäurediglycidylester, und Epoxide auf der Basis von Anilin, Diaminodiphenylmethan, N,N'-Dimethylaminodiphenylmethan oder -sulfon.

Infrage kommen auch Polyepoxide, die durch Reaktion von sauren Polyesterpolyolen mit überschüssigem, bifunktionellen Epoxiden resultieren. Die sauren Polyesterpolyole können z.B. durch Teilveresterung von Carbonsäureanhydriden mit höherfunktionellen Startern oder deren Ethylen- oder Propylenoxid-Addukten hergestellt werden.

Als Starter können Ethylenglykol, Diethylenglykol, Oligo- und Polyethylenglykole, Propylenglykole, Oligo-und Polypropylenglykole, Trimethylolpropan, Glycerin, Pentaerythrit, Sorbit, Sucrose und deren Propylenoxid/Ethylenoxid-Addukte verwendet werden. Als Anhdride können Phthalsäureanhydrid, Hexahydrophthalsäureanhydrid, Maleinsäureanhydrid oder Bernsteinsäureanhydrid verwendet werden.

5. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19-20, beschrieben.

6. Gegebenenfalls werden erfindungsgemäß Hilfs- und Zusatzmittel eingesetzt, wie

a) Wasser und/oder leicht flüchtige organische Substanzen als Treibmittel,

b) oberflächenaktive Zusatzstoffe, wie Emulgatoren und Schaumstabilisatoren,

c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß-oder Schlämmkreide.

Diese gegebenenfalls mitzuverwendenden Hilfs- und Zusatzstoffe werden beispielsweise in der DE-OS 2 732 292, Seiten 21-24, beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben, von Vieweg und Höchtlen, Carl-Hanser-Verlag, München 1966, z.B. auf den Seiten 103-113 beschrieben.

Zur Herstellung der Polyurethan-Verbundmaterialien bzw. der konfektionierten Polyurethane werden die erhaltenen Polyurethane mit anderen Werkstoffen, die auf dem Polyurethan z.B. Überzüge, Deckschichten oder Lackschichten bilden, in an sich bekannter Weise verarbeitet.

Die Verbindung zum Verbundmaterial kann dabei gleichzeitig mit der Herstellung des Polyurethans, z.B. nach der Hinterfüllungstechnik, oder auch nach der Herstellung des Polyurethans erfolgen. Die Konfektionierung des Polyurethans, z.B. das Versehen mit einem Überzug aus Leder oder Textilien, erfolgt in der Regel nach seiner Herstellung nach an sich bekannten Verfahren.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121-205, beschrieben.

Bei der Schaumstoffherstellung wird erfindungsgemäß die Verschäumung bevorzugt in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, in Frage. In der Form schäumt das schäumfähige Reaktonsgemisch auf und bildet den Formkörper. Die Formverschäumung kann dabei so durchgeführt werden, daß das Formteil an seiner Oberfläche eine Zellstruktur aufweist, sie kann aber auch so durchgeführt werden, daß das Formteil eine kompakte Haut und einen zelligen Kern aufweist. Erfindungsgemäß

kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Bei der bevorzugten Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekannt geworden sind.

Erfindungsgemäß ist oft bevorzugt, in konstant temperierter oder nicht beheizter Form geschäumte (kalthärtende) Formschaumstoffe herzustellen (vgl. PS 1 162 517, DE-OS 2 153 086).

Selbstverständlich können aber auch Schaumstoffe durch Blockverschäumung oder nach dem an sich bekannten Doppeltransportbandverfahren hergestellt werden.

Die erfindungegemäß erhältlichen, mit einem anderen Werkstoff verbundenen oder konfektionierten Polyurethane finden z.B. Anwendung als Armaturentafel, Armlehnen, Autohimmel, Kühlmöbel, Liege- und Sitzmöbel, Matratzen, Kopfstützen, Sitze in Verkehrsmitteln wie Auto, Zug, Flugzeug.

Beispiele

A. Herstellung der Epoxide

I. 200 g eines Polypropylenglykols der OH-Zahl 112, 39,2 g Maleinsäureanhydrid und 0,2 g Hydrochinon werden bis zu einer Säurezahl von 93 auf 100° C erwärmt, dann mit 144 g Hexahydrophthalsäurediglycidylester bis zu einer Säurezahl <2 auf 100° C erwärmt.
Viskosität: 3400 mPas (20° C)
Epoxidgehalt: 6,1 %
Epoxidäquivalentgewicht: 690,
OH-Zahl 55.

II. 370 g Octaethylenglykol, 196 g Maleinsäureanhydrid und 0,5 g Hydroohinon werden bis zur Säurezahl 198 auf 100° C erwärmt, anschließend mit 720 g Hexahydrophthalsäurediglycidylester bis zur Säurezahl <2 auf 100° C erhitzt.
OH-Zahl 90
Epoxidgehalt: 9,0 %
Epoxidäquivalentgewicht: 460.

III. 423 g eines Polypropylenglykols der OH-Zahl 265, 196 g Maleinsäureanhydrid und 0,5 g Hydrochinon werden bis zur Säurezahl von 181 auf 100° C erwärmt, dann mit 1000 g Bisphenol A -bis-glycidyl-ether vom Epoxidäquivalentgewicht 250 bis zu einer Saurezahl <2 auf 100° C erwärmt.
Epoxidgehalt: 5,2 %
Epoxidäquivalentgewicht: 810
OH-Zahl: 69

IV. 298 g Ricinolsäure und 500 g Bis-phenol-A-bis-glycidylether vom Epoxidäquivalentgewicht 250 werden bis zu einer Säurezahl von <2 auf 90° C erwärmt.
Epoxidgehalt: 6,6 %
Epoxidäquivalentgewicht: 640
OH-Zahl: 140.

V. 298 g Ricinolsäure und 380 g Hexahydrophthalsäurediglycidylester vom Epoxidäquivalentgewicht 180 werden bis zu einer Säurezahl von <2 auf 90° C erwärmt.
Epoxidgehalt: 7,5 %
Epoxidäquivalentgewicht: 560
OH-Zahl: 165.

VI. Bifunktionelles Epoxid auf Basis Bisphenol-A-bis-glycidylether vom Epoxidäquivalentgewicht 190.

VII. Bifunktionelles Epoxid auf Basis Bisphenol-A-bis-glycidylether vom Epoxidäquivalentgewicht 450 (Epicote® 1001, Shell).

VIII.Bifunktionelles Epoxid auf der Basis Bisphenol-A-glycidylether vom Epoxidäquivalentgewicht 250 (Epicote® 834, Shell).

IX. Bifunktionelles Epoxid auf der Basis Hexahydrophthalsäurebisglycidylester vom Epoxidäquivalentgewicht 180.

X. Hexadecan-1-oxid (Peroxidchemie, Höllrigelskreuth bei München).

Epoxidäquivalentgewicht: 156.

XI. 480 g eines Polyethers vom Molekulargewicht 4800, hergestellt durch Anlagerung von Propylenoxid (87 %) und Ethylenoxid (13 %) an Trimethylolpropan und 30 g Bernsteinsäureanhydrid werden bis zu einer Säurezahl von 33 auf 100 °C erwärmt und dann mit 150 g des Bisphenol-A-bis-glycidylethers vom Epoxidäquivalentgewicht 250 bis zu einer Säurezahl von 2 auf 100 °C erwärmt.

Epoxidgehalt: 2 %

Epoxidäquivalentgewicht: 2200

OH-Zahl: 25

XII. Bifunktionelles Epoxid auf Anilin-basis (Lekutherm® X 50, BAYER AG) vom Epoxidäquivalentgewicht 125.

XIII. Glycidylphenylether (Epoxidäquivalentgewicht 150)

XIV. Epoxidiertes Sojaöl, Epoxidgehalt 6,3 %
(Edenol D 82, HENKEL-DEHYDAG)
Epoxidäquivalentgewicht: 254

XV. Epoxidiertes Leinöl, Epoxidgehalt 8,5 %
(Edenol B 316, HENKEL-DEHYDAG)
Epoxidäquivalentgewicht: 188

B. Vergleichs- und Ausführungsbeispiele

Herstellung und Prüfung von durch halbharte Polyurethanschaumstoffe hinterschäumten PVC-Folien

Zur Hinterschäumung dienten folgende Polyurethan-Rohstofef:

Die angegebene Menge eines Polyetherpolyols vom Molekulargewicht 4800, das durch Anlagerung von Propylenoxid (87 %) und Ethylenoxid (13 %) an Trimethylolpropan erhalten wurde, 2,0 g Wasser, 2 g Tallöl sowie die nachstehend aufgeführten Aktivatoren wurde mit der angegebenen Menge eines Polyphenylpolymethylen-polyisocyanats, das durch Phosgenierung eines Anilin-Formaldehyd-Kondensates erhalten wurde und einen NCO-Gehalt von 31 Gew.-% aufweist, vermischt und in die Form eingetragen.

Die Abmischung des Polyethers mit den Epoxiden erfolgt durch gegebenenfalls leichtes Erwärmen, wobei dann in der Regel klare Lösungen der Epoxide erhalten werden.

Verfahrensweise

Eine nicht eingefärbte, handelsübliche, ca. 0,7 mm dicke PVC-Folie wird in ein temperierbares Plattenmetallwerkzeug der Größe 20 x 20 x 4 cm einlegt und rückseitig maschinell mit der oben angegebenen Rohstoffmischung hinterfüllt. Nach einer Reaktions- und Aushärtezeit von 5 Min. wird entformt.

T a b e l l e   1   Rohstoffzusammensetzung in Gew.-Teilen und thermische Belastung

| Beispiele | Vergleichsbeispiele 1 | 2 | 3 | 4 | 5 | 6 | 7 | 8 | 9 | 10 | 11 | 12 | 13 |
|---|---|---|---|---|---|---|---|---|---|---|---|---|---|
| Polyether | 90 | 90 | 90 | 88 | 88 | 88 | 80 | 80 | 80 | 85 | 85 | 85 | 85 |
| Epoxid nach Beispiel | ohne | ohne | ohne | VIII | VIII | VIII | VIII | VIII | VIII | IX | VII | VI | V |
| Gewichtsteile des Epoxids | | | | 2 | 2 | 2 | 10 | 10 | 10 | 5 | 5 | 5 | 5 |
| Isocyanat | 42 | 42 | 42 | 42 | 42 | 44 | 41 | 41 | 41 | 41 | 41 | 41 | 43 |
| Aktivator Niax A1® | 0,4 | - | - | 0,4 | - | - | 0,4 | - | - | - | - | - | - |
| Aktivator Dabco33LV® | - | 0,4 | - | - | 0,4 | - | - | 0,4 | - | - | - | - | 0,4 |
| Aktivator Dibutylzinndilaurat | - | - | 0,1 | - | - | 0,1 | - | - | 0,1 | 0,1 | 0,1 | 0,1 | - |

Die erhaltenen mit PVC hinterschäumten Formteile werden bei 120°C im Umlufttrockenschrank für 500 h separat getempert, wobei folgende Ergebnisse erhalten wurden:

| | unbeh. | nach 500 Stunden → | | | | | | | | | | | |
|---|---|---|---|---|---|---|---|---|---|---|---|---|---|
| Farbe *) | 1 | 4 | 4 | 3 | 2 | 2 | 1 | 2 | 2 | 1 | 1 | 1 | 1 | 2 |
| Elastizität der Folie **) | 1 | 4 | 4 | 3-4 | 2 | 2 | 2 | 2 | 2 | 2 | 2 | 2 | 2 | 2 |
| Schaumstruktur an der Foliengrenze ***) | 1 | 3 | 3 | 3 | 1 | 1 | 1 | 1 | 1 | 1 | 1 | 1 | 1 | 1 |

*) Farbklassifizierung 1 = beige, 2 = dunkelbeige, 3 = dunkelbraun, 4 = schwarz;

**) Elastizität der Folien 1 = hochelastisch, 2 = elastisch, 3 = versprödet, 4 = total versprödet;

***) Schaumstruktur an der Foliengrenze 1 = elastisch, 2 = brüchig, 3 = stark brüchig.

**T a b e l l e 2** Rohstoffzusammensetzung in Gew.-Teilen und thermische Belastung

| Beispiele | | 14 | 15 | 16 | 17 | 18 | 19 | 20 | 21 | 22 | 23 | 24 |
|---|---|---|---|---|---|---|---|---|---|---|---|---|
| Polyether | | 85 | 80 | 80 | 80 | 85 | 85 | 75 | 80 | 80 | 80 | 80 |
| Epoxid nach Beispiel | | V | I | II | III | X | XII | XII | XIV | XIV | XV | XV |
| Gewichtsteile des Epoxids | | 5 | 10 | 10 | 10 | 5 | 5 | 15 | 10 | 10 | 10 | 10 |
| Isocyanat | | 43 | 42 | 43 | 41 | 41 | 41 | 40 | 41 | 41 | 41 | 41 |
| | Niax A1® | - | - | - | - | - | - | | - | 0,4 | - | 0,4 |
| Aktivator | Dabco33LV® | - | - | - | - | - | - | | - | - | - | - |
| | Dibutyl-zinndi-laurat | 0,1 | 0,1 | 0,1 | 0,1 | 0,1 | 0,1 | 0,1 | 0,1 | - | 0,1 | - |

Die erhaltenen mit PVC-Folien hinterschäumten Formteile werden bei 120°C im Umlufttrockenschrank für 500 h seperat getempert, wobei folgende Ergebnisse erhalten wurden:

| | nach 500 h ⟶ | | | | | | | | | | | |
|---|---|---|---|---|---|---|---|---|---|---|---|---|
| Farbe *) | 1 | 1 | 1 | 1 | 1 | 1 | 1 | 1 | 1 | 1 | 1 | 1 |
| Elastizität der Folie**) | 2 | 2 | 2 | 2 | 2 | 2 | 2 | 2 | 2 | 2 | 2 | 2 |
| Schaumstruktur an der Foliengrenze***) | 1 | 1 | 1 | 1 | 1 | 1 | 1 | 1 | 1 | 1 | 1 | 1 |

*) Farbklassifizierung 1 = beige, 2 = dunkelbeige, 3 = dunkelbraun, 4 = schwarz;
**) Elastizität der Folien 1 = hochelastisch, 2 = elastisch, 3 = versprödet, 4 = total versprödet;
***) Schaumstruktur an der Foliengrenze 1 = elastisch, 2 = brüchig, 3 = stark brüchig;

Tabelle 3 Rohstoffzusammensetzung in Gew.-Teilen, thermische Belastung und Bruchdehnungsmessungen der Folien

| Beispiel | Vergleichsversuch | 1 | 2 | 3 |
|---|---|---|---|---|
| Polyether | 90 | 95 | 90 | 80 |
| Epoxid nach Beispiel | - | XII | XII | XII |
| Gew.-Teile des Epoxids | - | 5 | 10 | 20 |
| Isocyanat | 42 | 44 | 42 | 36 |
| Dibutylzinndilaurat | 0,1 | 0,1 | 0,1 | 0,1 |
| Bruchdehnung der Folien ohne Schaum (%) *) | 185 | 185 | 185 | 185 |
| Bruchdehnung der vom Schaum getrennten Folien (%) **) | 80 | 150 | 155 | 160 |

*) Bruchdehnung der reinen PVC-Folien nach 500 h bei 120° C im Zugversuch nach DIN 53 504

**) Die hinterschäumten PVC-Folien wurden nach der Prüfung von 500 Stunden bei 120° C vom Schaumstoff abgeschält und dann die Bruchdehnung im Zugversuch nach DIN 53 504 bestimmt.

Aus den Tabellen geht hervor, daß die erfindungsgemäß mit Epoxiden hergestellten Polyurethanschaumstoffe eine gegenüber dem Stand der Technik stark verbesserte Folienstabilität zeigen (Beispiele 4 bis 24).

Folie und PUR-Schaum behalten hierdurch die Polymereigenschaften wie im unbelasteten Zustand.

Ein Abbau- und Schädigungsverhalten wird makroskopisch nicht mehr registriert.

Quantifiziert wird dies besonders durch die gegenüber allen im Vergleichsversuch in den Tabelle 3 und 4 gesteigerten Werte für die Bruchdehnung der Folien nach der Temperung des Verbundmaterials.

Die besondere Überlegenheit der Fettsäureester-Epoxide der Beispiele 21 bis 24 zeigt sich auch darin, daß diese Typen im Verlauf der thermischen Belastung den Polyurethanschaumstoff nicht nachhärten und auch seine ursprüngliche Elastizität beibehalten wird.

Die Formulierungen der Beispiele 21 bis 24 aus Epoxid, Polyol, Wasser und Aktivatoren zeigen eine gute Lagerstabilität sowie keine Aktivitätsverluste auch nach mehreren Monaten.

Im Verlaufe des 500 Stunden-Testes bei 120 °C härten die Polyurethanschaumstoffe der Beispiele 7, 8, 9, 10, 11, 12, 18, 19, 20 nach.

Tabelle 4

| Rohstoffzusammensetzung in Gew.-Teilen, thermische Belastung und Bruchdehnungsmessungen der Folien | | |
|---|---|---|
| Beispiel | Vergleichsversuch | 1 |
| Polyether | 90 | 80 |
| Epoxid nach Beispiel | - | XV |
| Gew.-Teile des Epoxids | - | 20 |
| Isocyanat | 42 | 36 |
| Dibutylzinndilaurat | 0,1 | 0,1 |
| Bruchdehnung der Folien ohne Schaum (%)* | 185 | 185 |
| Bruchdehnung der vom Schaum getrennten Folien (%)** | 80 | 155 |

*) Bruchdehnung der reinen PVC-Folien nach 500 h bei 120 °C im Zugversuch nach DIN 53 504.

**) Die hinterschäumten PVC-Folien werden nach der Prüfung von 500 h bei 120 °C vom Schaumstoff abgeschält und dann die Bruchdehnung im Zugversuch nach DIN 53 504 bestimmt.

## Patentansprüche

1. Verfahren zur Herstellung von gegebenenfalls zellförmigen, mit einem anderen Werkstoff verbundenen oder konfektionierten Polyurethanen durch Umsetzung von mindestens zwei gegenüber Isocyanaten reaktionsfähige Wasserstoffatome aufweisenden Verbindungen vom Molekulargewicht 400 bis 10 000 mit Polyisocyanaten in Gegenwart von Katalysatoren und Stabilisatoren gegen Thermolyse und Kontaktverfärbung und gegebenenfalls in Gegenwart von Kettenverlängerungsmitteln vom Molekulargewicht 32 bis 399, Schaumstabilisatoren, Wasser und/oder organischen Treibmitteln sowie gegebenenfalls weiteren Hilfs- und Zusatzmitteln und Verbindung oder Konfektionierung des erhaltenen Polyurethans mit einem anderen Werkstoff, dadurch gekennzeichnet, daß als Stabilisatoren gegen Thermolyse und Kontaktverfärbung Epoxide, in Mengen von 0,01 bis 50 Gew.-Teilen, bezogen auf 100 Gew.-Teile der mindestens zwei gegenüber Isocyanaten reaktionsfähige Wasserstoffatome aufweisenden Verbindungen vom Molekulargewicht 400-10 000, verwendet werden.

2. Verfahren gemäß Anspruch 1, dadurch gekennzeichnet, daß als anderer Werkstoff ein Kunststoff in Form von Folien, Überzügen und Umrandungen, oder Lacke auf der Basis von Celluloseestern oder Celluloseethern, Polyesterharzen, Epoxidharzen oder Alkydharzen sowie Öllacke oder Kombinationslacke dieser Komponenten oder Textilien auf der Basis von Baumwolle oder Leder verwendet werden.

3. Verfahren gemäß Anspruch 2, dadurch gekennzeichnet, daß der Kunststoff aus PVC, ABS, Mischungen aus PVC und ABS, Polyvinylacetat, Polyvinylbutyral, Co- und Homopolymerisaten auf Basis von Vinylchlorid, Styrol, Butadien, Isopren, Chloropren, Dichlorbutadien, Ethylen, Propen und Acrylnitril und deren Chlor- und Chlorsulfonierungsderivate bestehen.

4. Verfahren gemäß Anspruch 1 bis 3, dadurch gekennzeichnet, daß als Epoxide , mehrfunktionelle Epoxide vom Epoxidäquivalentgewicht von 57 bis 10 000, verwendet werden.

5. Verfahren nach Anspruch 1 bis 3, dadurch gekennzeichnet, daß als Epoxide die Epoxidierungsprodukte ungesättigter Fettsäureester verwendet werden.

6. Verfahren nach Anspruch 1 bis 3, dadurch gekennzeichnet, daß Epoxileinöl, Epoxisojaöl, Epoxikokosöl, Epoxiricinusöl, Epoxipalmöl und Epoxiolivenöl verwendet werden.

7. Verfahren nach Anspruch 1 bis 4, dadurch gekennzeichnet, daß als mehrfunktionelle Epoxide Polyglycidylether oder -ester und/oder 1,2-Polyepoxide mit mindestens einem tertiären Stickstoffatom verwendet werden.

8. Verfahren nach Anspruch 1 bis 4 und 7, dadurch gekennzeichnet, daß die Polyglycidylether oder -ester und/oder 1,2-Polyepoxide mit mindestens einem tertiären Stickstoffatom im Überschuß, bezogen auf die Epoxidgruppierung, mit Carbxylgruppen enthaltenden Polyether- oder Polyesterpolyolen zu höhermolekularen Epoxiden umgesetzt worden sind.

9. Verfahren nach Anspruch 1 bis 4, dadurch gekennzeichnet, daß als mehrfunktionelle Epoxide Bisphenol-A-bisglycidylether und dessen höhere Homologe verwendet werden.

10. Gegebenenfalls zellförmige, mit einem anderen Werkstoff verbundene oder konfektionierte Polyurethane, erhältlich nach dem Verfahren gemäß Anspruch 1 bis 10.

## Claims

1. A process for the production of optionally cellular polyurethanes combined or blended with another material by reaction of compounds containing at least two isocyanatereactive hydrogen atoms and having a molecular weight of 400 to 10,000 with polyisocyanates in the presence of catalysts and stabilizers against thermolysis and contact discolouration and optionally in the presence of chain-extending agents having a molecular weight of from 32 to 399, foam stabilizers, water and/or organic blowing agents and, optionally, other auxiliaries and additives and combining or blending the polyurethane obtained with another material, characterized in that epoxides are used as the stabilizers against thermolysis and contact discolouration in quantities of 0.01 to 50 parts by weight to 100 parts by weight of the compounds containing at least two isocyanate-reactive hydrogen atoms and having a molecular weight of 400 to 10,000.

2. A process as claimed in claim 1, characterized in that the other material used is a plastic in the form of films, coatings and edge trimmings or lacquers based on cellulose esters or cellulose ethers, polyester resins, epoxy resins or alkyd resins and oil lacquers or combination lacquers of these components or cotton-based fabrics or leather.

3. A process as claimed in claim 2, characterized in that the plastic consists of PVC, ABS, mixtures of PVC and ABS, polyvinyl acetate, polyvinyl butyral, co- and homopolymers based on vinyl chloride, styrene, butadiene, isoprene, chloroprene, dichlorobutadiene, ethylene, propene and acrylonitrile and chlorination and chlorosulfonation derivatives thereof.

4. A process as claimed in claims 1 to 3, characterized in that the epoxides used are polyfunctional epoxides having an epoxide equivalent weight of 57 to 10,000.

5. A process as claimed in claims 1 to 3, characterized in that the epoxides used are epoxidation products of unsaturated fatty acid esters.

6. A process as claimed in claims 1 to 3, characterized in that epoxylinseed oil, epoxysoybean oil, epoxycoconut oil, epoxycastor oil, epoxypalm oil and epoxyolive oil are used.

7. A process as claimed in claims 1 to 4, characterized in that the polyfunctional epoxides used are polyglycidyl ethers or esters and/or 1,2-polyepoxides containing at least one tertiary nitrogen atom.

8. A process as claimed in claims 1 to 4 and 7, characterized in that the polyglycidyl ethers or esters and/or 1,2-polyepoxides containing at least one tertiary nitrogen atom have been reacted in excess, based on the epoxide group, with carboxyl-functional polyether or polyester polyols to form epoxides of relatively high molecular weight.

9. A process as claimed in claims 1 to 4, characterized in that bisphenol A bisglycidyl ether and higher homologs thereof are used as the polyfunctional epoxides.

10. Optionally cellular polyurethanes combined or blended with another material obtainable by the process claimed in claims 1 to 10.

**Revendications**

1. Procédé de production de polyuréthanes éventuellement cellulaires, combinés ou confectionnés avec un autre matériau, par réaction de composés de poids moléculaire de 400 à 10 000 présentant au moins deux atomes d'hydrogène capables de réagir avec des isocyanates, avec des isocyanates en présence de catalyseurs et de stabilisants contre la thermolyse et la décoloration au contact, et le cas échéant en présence de prolongateurs de chaîne de poids moléculaire 32 à 399, de stabilisateurs de mousse, d'eau et/ou d'agents gonflants organiques, ainsi qu'éventuellement d'autres adjuvants et additifs, et combinaison ou confection du polyuréthane obtenu avec un autre matériau, caractérisé en ce que l'on utilise comme agents stabilisants contre la thermolyse et la décoloration au contact, des époxydes, en quantité de 0,01 à 50 parts en poids sur 100 parts en poids des composés de poids moléculaire de 400 à 10 000 présentant au moins deux atomes d'hydrogène capables de réagir avec des isocyanates.

2. Procédé selon la revendication 1, caractérisé en ce que l'on utilise comme autre matériau une matière synthétique sous forme de feuils, revêtements et bordures, ou des peintures sur base d'esters ou éthers cellulosiques, de résines polyester, de résines époxy ou de résines alkydes, ainsi que des peintures à l'huile ou des peintures obtenues par combinaison de ces composants, ou des textiles sur base de coton ou du cuir.

3. Procédé selon la revendication 2, caractérisé en ce que la matière synthétique est composée de PVC, ABS, de mélanges de PVC et ABS, d'acétate de polyvinyle, de butyral de polyvinyle, de copolymères et d'homopolymères sur base de chlorure de vinyle, styrène, butadiène, isoprène, chloroprène, dichlorobutadiène, éthylène, propylène et acrylonitrile et leurs dérivés chlorés et chlorosulfonés.

4. Procédé selon les revendications 1 à 3, caractérisé en ce que l'on utilise comme époxyde des époxydes plurifonctionnels de poids équivalent époxy de 57 à 10 000.

5. Procédé selon les revendications 1 à 3 caractérisé en ce que l'on utilise comme époxydes les produits époxydés d'esters d'acides gras insaturés.

6. Procédé selon les revendications 1 à 3, caractérisé en ce que l'on utilise de l'huile de lin, de l'huile de soja, de l'huile de copra, de l'huile de ricin, de l'huile de palme, et de l'huile d'olive epoxydées.

7. Procédé selon les revendications 1 à 4, caractérisé en ce que l'on utilise comme époxyde plurifonctionnel des éthers ou esters polyglycidyliques et/ou des 1,2 polyépoxydes, avec au moins un atome d'azote tertiaire.

8. Procédé selon les revendications 1 à 4 et 7, caractérisé en ce que les éthers ou esters polyglycidyliques et/ou les 1,2 polyépoxydes avec au moins un atome d'azote tertiaire en excès, par rapport au goupe époxyde, ont été transformés en des époxydes de poids moléculaire supérieur avec des polyols polyéther ou polyester contenant des groupes carboxyles.

9. Procédé selon les revendications 1 à 4, caractérisé en ce que des éthers bisglycidyliques de bisphénol A et leurs homologues supérieurs sont utilisés comme époxydes plurifonctionnels.

10. Des polyuréthanes éventuellement cellulaires, combinés ou confectionnés avec un autre matériau, que l'on peut obtenir selon le procédé selon les revendications 1 à 10.